# EUROPÄISCHE PATENTANMELDUNG

(11) **EP 4 001 188 A1**
(43) Veröffentlichungstag der Anmeldung: **25.05.2022**
(21) Anmeldenummer: 20207859.8
(22) Anmeldetag: 16.11.2020
(51) Int. Cl.: B65G 47/64, B65G 47/96

(54) **MEHRFACH ENDSTELLE FÜR EINE SORTIERANLAGE**

(71) Anmelder: Siemens Aktiengesellschaft, 80333 München (DE)
(72) Erfinder: WANNER, Bertram, 88709 Meersburg (DE); SKRDLANT, Rolf-Peter, 88662 Überlingen (DE); ASCHPURWIS, Carsten, 78464 Konstanz (DE); EISSER, Dirk-Udo, 78479 Reichenau (DE); FISCHER, Felix, 78462 Konstanz (DE)
(74) Vertreter: Siemens Patent Attorneys

(57) **Zusammenfassung**

Endstellenvorrichtung (1) für eine Sortieranlage (100) zum Sortieren von Stückgütern (5), umfassend eine Aufnahmevorrichtung (2), eine Transportvorrichtung (4) und eine Reihenanordnung (6) von in einer Reihe angeordneten Endstellen (61); wobei die Aufnahmevorrichtung (2) ausgestaltet ist, ein Stückgut (5) von einem Sorterausgang (81) eines Sorters (8) der Sortieranlage (100) zu übernehmen und an die Transportvorrichtung (4) abzugeben;
wobei die Transportvorrichtung (4) eine Transporteinheit (41) umfasst, die zu jeder der in der Reihe an-geordneten Endstellen (61) bewegbar ist;
und wobei die Transportvorrichtung (4) ausgestaltet ist, das von der Aufnahmevorrichtung (2) abgegebene Stückgut (5) zu übernehmen und mit der Transporteinheit (41) an eine gewünschte Endstelle (61) der in der Reihe angeordneten Endstellen (61) zu transportieren und in diese gewünschte Endstelle (61) abzugeben.

## Beschreibung

Die Erfindung bezieht sich auf das technische Gebiet der Sortieranlagen für Stückgut und insbesondere der Endstelleneinrichtungen und Endstellenvorrichtungen von Sortieranlagen für Stückgut.

Bisher waren an einer Abwurfposition am Sorter maximal zwei Endstellenbehälter vorhanden, links und rechts vom Sorter. Teilweise werden Sorter übereinander angeordnet oder nach dem Abwurf vom Sorter in den Rutschen über mechanische Vorrichtungen verzweigt. Hier sind die Möglichkeiten begrenzt, weil die Fördergüter nicht aktiv transportiert werden. Mehr Endstellen sind damit praktisch nur durch Verlängerung des Sorters möglich.

Betreiber von Sortieranlagen für Stückgut, wie beispielsweise Post- oder Paketdienste, aber auch Betreiber von Sortieranlagen auf Flughäfen, müssen oft auf einer beschränkten Fläche eine grosse Anzahl Stückgüter in eine grosse Anzahl von Sortierzielen sortieren. Die beschränkte Fläche steht daher dem Wunsch einer hohen Sortiertiefe entgegen. Dem kann zwar durch eine Erhöhung der Sortierdurchgänge begegnet werden, allerdings wird dadurch die Sortierung als Ganzes komplexer und langsamer.

Der vorliegenden Erfindung liegt daher die Aufgabe zugrunde, eine Erhöhung der Sortiertiefe einer Sortieranlage zu ermöglichen.

Diese Aufgabe wird durch die unabhängigen Ansprüche gelöst. Vorteile und Ausgestaltungen der Erfindung, die einzeln oder in Kombination miteinander einsetzbar sind, sind Gegenstand der Unteransprüche.

Gemäss einem Aspekt wird die Aufgabe durch eine Endstellenvorrichtung gelöst. Die Endstellenvorrichtung ist für eine Sortieranlage zum Sortieren von Stückgütern vorgesehen. Die Endstellenvorrichtung umfasst eine Aufnahmevorrichtung, eine Transportvorrichtung und eine Reihenanordnung von in einer Reihe angeordneten Endstellen. Die Aufnahmevorrichtung ist ausgestaltet, ein Stückgut von einem Sorterausgang eines Sorters der Sortieranlage zu übernehmen und an die Transportvorrichtung abzugeben. Die Transportvorrichtung umfasst eine Transporteinheit, die zu jeder der in der Reihe angeordneten Endstellen bewegbar ist. Die Transportvorrichtung ist ausgestaltet, das von der Aufnahmevorrichtung abgegebene Stückgut in die Transporteinheit zu übernehmen, das Stückgut in oder auf der Transporteinheit an eine gewünschte Endstelle der in der Reihe angeordneten Endstellen zu transportieren und das Stückgut in diese gewünschte Endstelle abzugeben.

Dadurch können auf einer verfügbaren Fläche deutlich mehr Endstellen untergebracht werden als bisher üblich. Auf diese Weise lässt sich eine größere Sortiertiefe erreichen und es kann in weniger Sortiervorgängen als bisher sortiert werden, wodurch sich deutlich Kosten sparen lassen.

Gemäss einem Ausführungsbeispiel umfasst die Aufnahmevorrichtung einen Zwischenspeicher, um das von dem Sorterausgang aufgenommene Stückgut zu zwischenspeichern. Die Transportvorrichtung ist ausgestaltet, die Transporteinheit zu dem Zwischenspeicher zu bewegen. Der Zwischenspeicher ist ausgestaltet, das Stückgut an die Transporteinheit abzugeben. Dadurch lässt sich der Sorter von den Endstellen entkoppeln. Dadurch kann Rezirkulation auf dem Sorter verhindert oder minimiert werden. Der Zwischenspeicher bewirkt zudem eine Beruhigung der Transportgüter nach der Übergabe von dem Sorter, wobei die Übergabe vorzugsweise einen dynamischen Abwurf von einem nicht ruhenden Ladungsträger und einen darauffolgenden Rutschvorgang auf der Aufnahmevorrichtung umfasst.

Je nach Anwendungsfall kann die Aufnahmevorrichtung einen oder mehrere Zwischenspeicher umfassen. In vielen Fällen, abhängig von der Auslegung der Sortieranlage oder der Endstellenanordnung, lässt sich bereits durch das Vorhandensein eines einzigen Zwischenspeichers in der Aufnahmevorrichtung eine deutliche Leistungssteigerung erzielen, während der Zusatznutzen eines zweiten Zwischenspeichers oder weiterer Zwischenspeicher in der Endstellenvorrichtung zwar existiert, aber weniger ins Gewicht fällt als der Nutzen des ersten Zwischenspeichers.

Gemäss einem Ausführungsbeispiel umfasst der Sorter mehrere Sorterausgänge und ist ausgestaltet, Stückgüter seitlich von der Hauptförderrichtung des Sorters aus den Sorterausgängen oder vertikal nach unten zur Hauptförderrichtung des Sorters auszuschleusen.

Gemäss einem Ausführungsbeispiel ist die Reihe der Endstellen bei dem Sorterausgang quer zur Hauptförderrichtung des Sorters angeordnet. Vorteilhafterweise ist die Transportvorrichtung ausgestaltet, die Transporteinheit entsprechend der Reihenanordnung der Endstellen ebenfalls quer zur Hauptförderrichtung des Sorters linear zu bewegen, um das Stückgut in die gewünschte Endstelle abzugeben. So lassen sich besonders viele Endstellen durch einen Sorterausgang bei einem geringen Abstand von einem Sorterausgang zum nächsten Sorterausgang bedienen. Gemäss einer Ausführungsform ist die Reihe der Endstellen orthogonal zur Hauptförderrichtung des Sorters angeordnet.

Gemäss einem Ausführungsbeispiel ist jeder Transporteinheit eine einzige lineare Reihenanordnung von Endstellen zugeordnet, und die Transportvorrichtung ist ausgestaltet, Stückgüter ausschliesslich in die Endstellen dieser Reihenanordnung abzugeben. Unter linear ist dabei eine eindimensionale Anordnung von Endstellen in einer Linie zu verstehen. Vorzugsweise erstreckt sich die Transportvorrichtung über der Reihenanordnung entlang dieser Linie.

Gemäss einem Ausführungsbeispiel umfasst die Transportvorrichtung einen Antrieb, der ausgestaltet ist, die Transporteinheit aktiv anzutreiben. Dies ermöglicht einen aktiven Transport des Stückguts. Dadurch sind weniger oder gar keine passiven Transportmittel, wie beispielsweise Rutschen, notwendig, wodurch eine hohe funktionale Sicherheit, eine sehr hohe Packungsdichte der Endstellen und die Unterbringung von mehr Endstellen auf einer vorgegebenen Fläche ermöglicht werden.

Gemäss einem Ausführungsbeispiel ist die Transporteinheit als Schiebewagen ausgestaltet. Dadurch lässt sich eine einfache Transportvorrichtung realisieren, die effizient mit der Reihenanordnung der Endstellen zusammenwirkt.

Gemäss einem Ausführungsbeispiel ist der Schiebewagen spurgeführt. Dadurch lässt sich eine einfache Transportvorrichtung realisieren, die effizient mit der Reihenanordnung der Endstellen zusammenwirkt.

Gemäss einem Ausführungsbeispiel ist oder umfasst die Transporteinheit kein automated guided vehicle (AGV). Dadurch lässt sich eine einfache Transportvorrichtung realisieren, die effizient mit der Reihenanordnung der Endstellen zusammenwirkt. In einer alternativen Ausführungsform kann die Transporteinheit jedoch ein AGV umfassen.

Gemäss einem Ausführungsbeispiel umfasst die Transporteinheit einen Bandförderer, der ausgestaltet ist, das Stückgut abzuwerfen. Dadurch lässt sich eine zuverlässige und insbesondere bezüglich der vertikalen Bauhöhe Platz sparende Vorrichtung zur Übergabe der Stückgüter von der Transportvorrichtung in die Endstellen realisieren.

Gemäss einem Ausführungsbeispiel umfasst ein Förderband des Bandförderers Trennelemente, die mindestens ein Segment definieren, oder die das Förderband in Segmente unterteilen.

Dadurch lässt sich mit geringem Aufwand ein definierter und kostengünstiger Aufnahmeplatz für das Stückgut auf der Transporteinheit erzeugen.

Gemäss einem Ausführungsbeispiel umfasst die Endstellenvorrichtung, die Endstelleneinrichtung oder die Sortieranlage eine Steuereinrichtung. Die Steuereinrichtung ist adaptiert, die Aufnahmevorrichtung und die Transportvor-richtung anzusteuern und die Übergabe des Stückguts von der Aufnahmevorrichtung in die Transportvorrichtung und die Abgabe des Stückguts von der Transportvorrichtung in die gewünschte Endstelle sicherzustellen.

Gemäss einem Ausführungsbeispiel ist die Steuereinrichtung adaptiert, die Endstellenvorrichtung und/oder die Endstelleneinrichtung und/oder die Sortieranalage so anzusteuern, dass zu jedem Zeitpunkt maximal ein Stückgut in dem Zwischenspeicher aufgenommen wird. Beispielsweise ist die Steuereinrichtung adaptiert zu memorisieren, ob der Zwischenspeicher belegt ist, und solange er belegt ist, zu verhindern, dass eine weitere Abgabe eines weiteren Stückguts an diesen Zwischenspeicher erwirkt wird. Dadurch lässt sich eine kompliziere Einzelbehandlung von gleichzeitig sich im Zwischenspeicher befindenden Stückgütern vermeiden. Der Begriff in dem "Zwischenspeichern" beinhaltet sämtliche Vorgänge oder Fähigkeiten des Zwischenspeichers, ein Stückgut zu speichern. Wenn beispielsweise einer der Zwischenspeicher aus einer flachen Aufnahmefläche besteht, auf der das Stückgut aufliegt, so ist dies auch als ein Speichern in dem Zwischenspeicher zu verstehen.

Gemäss einem Ausführungsbeispiel ist die Steuereinrichtung adaptiert, die Endstellenvorrichtung und/oder die Endstelleneinrichtung und/oder die Sortieranalage so anzusteuern, dass ein erstes und ein zweites von dem Sorter an die Aufnahmevorrichtung abgegebenes Stückgut gleichzeitig in dem Zwischenspeicher aufgenommen werden, sofern diese in dieselbe Endstelle einzusortieren sind. Die Steuereinrichtung ist vorzugsweise zudem adaptiert, die Endstellenvorrichtung und/oder die Endstelleneinrichtung und/oder die Sortieranalage so anzusteuern, dass verhindert wird, dass zwischen dem ersten und dem zweiten Stückgut ein weiteres Stückgut von dem Sorter an die Aufnahmevorrichtung abgegeben wird, das an eine andere Endstelle einzusortieren ist.

Gemäss einem Ausführungsbeispiel umfasst die Endstellenvorrichtung eine ausziehbare Schubladenvorrichtung. In der Schubladenvorrichtung sind die in einer Reihe angeordneten Endstellen angeordnet. Dadurch lässt sich auch bei einer kompakten Konstruktion ein einfacher Zugang zu den Endstellen, beispielsweise zum Zweck der Wartung, sicherstellen. Vorzugsweise ist die Endstellenvorrichtung in Längsrichtung der Reihe ausziehbar. Dadurch kann die Schubladenvorrichtung auch dann noch ausgezogen werden, wenn sie aufgrund einer kompakten Bauweise seitlich an weitere Schubladenvorrichtungen oder Reihenanordnungen von Endstellen unmittelbar angrenzt. Gemäss einem Ausführungsbeispiel umfasst die Schubladenvorrichtung genau eine Schublade. Gemäss einem weiteren Ausführungsbeispiel umfasst die Schubladenvorrichtung genau zwei Schubladen, die in entgegengesetzten Richtungen ausziehbar sind. Dadurch lässt sich die Schubladengrösse verringern und der für die ausgezogenen Schubladen vorzusehende Raum optimieren.

Gemäss einem Ausführungsbeispiel umfasst die Endstellenvorrichtung eine unter der Reihenanordnung angeordnete Sammel-Bandfördervorrichtung. Jede der Endstellen ist ausgestaltet, die in ihr enthaltenen Stückgüter in einer Gruppe auf die Sammel-Bandfördervorrichtung abzugeben. Die Sammel-Bandfördervorrichtung ist ausgestaltet, die Stückgüter in der Gruppe abzutransportieren. Dadurch lassen sich mehrere Endstellen derselben oder unterschiedlicher Endstellenvorrichtungen auf einfache Weise mittels eines einzigen Sammelbandes entleeren.

Gemäss einem Ausführungsbeispiel ist jeder Sorterausgang genau einer Endstellenvorrichtung zugeordnet. Jede Endstellenvorrichtung umfasst genau eine lineare Transportvorrichtung, die über einer eindimensionalen lineare Reihenanordnung von Endstellen angeordnet ist, um Stückgüter in eine gewünschte dieser Endstellen abzuwerfen. Vorzugsweise umfasst jede Endstellenvorrichtung auch genau einen Zwischenspeicher.

Gemäss einem weiteren Aspekt wird die Aufgabe, eine Erhöhung der Sortiertiefe einer Sortieranlage zu ermöglichen, durch eine Endstelleneinrichtung gelöst. Die Endstelleneinrichtung umfasst mehrere der oben beschriebenen Endstellenvorrichtungen. Jede der Endstellenvorrichtungen ist ausgestaltet mit einem Sorterausgang eines Sorters zusammenzuwirken, um Stückgüter von dem Sorterausgang aufzunehmen und an ihre Transportvorrichtung abzugeben.

Gemäss einem weiteren Aspekt wird die Aufgabe, eine Erhöhung der Sortiertiefe einer Sortieranlage zu ermöglichen, durch eine Sortieranlage gelöst. Die Sortieranlage umfasst einen Sorter sowie eine oder mehrere der oben beschriebenen Endstellenvorrichtungen oder eine oder mehrere der oben beschriebenen Endstelleneinrichtungen.

Gemäss einem weiteren Aspekt wird die Aufgabe durch ein Verfahren zum Sortieren von Stückgütern gelöst, in dessen Rahmen ein Stückgut von einem Sorterausgang eines Sorters an eine Aufnahmevorrichtung einer Endstellenvorrichtung übergeben wird. Die Aufnahmevorrichtung gibt das Stückgut an eine Transporteinheit einer Transportvorrichtung ab. Der Transporteinheit ist eine Reihenanordnung von in einer Reihe angeordneten Endstellen zugeordnet. Die Transporteinheit ist zu jeder der in der Reihenanordnung angeordneten Endstellen bewegbar. Das an die Transporteinheit abgegebene Stückgut wird mittels der Transporteinheit zu einer gewünschten Endstelle der in der Reihe angeordneten Endstellen transportiert und von der Transporteinheit an diese gewünschte Endstelle übergeben.

Gemäss einem Ausführungsbeispiel wird das Stückgut vor der Abgabe des Stückguts von der Aufnahmevorrichtung an die Transporteinheit in einem oder mehreren Zwischenspeichern der Aufnahmevorrichtung zwischengespeichert. Die Transporteinheit wird zu dem Zwischenspeicher bewegt. Der Zwischenspeicher gibt das Stückgut an die Transporteinheit ab.

Gemäss einem Ausführungsbeispiel wird das Stückgut seitlich zur Hauptförderrichtung des Sorters oder vertikal nach unten zur Hauptförderrichtung des Sorters aus dem Sorterausgang ausgeschleust.

Gemäss einem Ausführungsbeispiel ist die Reihenanordnung der Endstellen bei dem Sorterausgang quer zur Hauptförderrichtung des Sorters angeordnet.

Gemäss einem Ausführungsbeispiel ist der Transporteinheit eine einzige lineare Reihenanordnung zugeordnet. Die Transportvorrichtung ist ausgestaltet, Stückgüter ausschliesslich in die Endstellen dieser Reihenanordnung abzugeben.

Gemäss einem Ausführungsbeispiel umfasst die Transportvorrichtung einen Antrieb, der ausgestaltet ist, die Transporteinheit aktiv anzutreiben.

Gemäss einem Ausführungsbeispiel ist die Transporteinheit als Schiebwagen ausgestaltet, der vorzugsweise in einer Spur führbar ist.

Gemäss einem Ausführungsbeispiel umfasst die Transporteinheit einen Bandförderer, der ausgestaltet ist, das Stückgut abzuwerfen.

Gemäss einem Ausführungsbeispiel umfasst ein Förderband des Bandförderers Trennelemente, die mindestens ein Segment definieren, oder die das Förderband in Segmente unterteilen.

Gemäss einem Ausführungsbeispiel steuert eine Steuereinrichtung die Aufnahmevorrichtung und die Transportvorrichtung an, um die Übergabe des Stückguts von der Aufnahmevorrichtung in die Transportvorrichtung und die Abgabe des Stückguts von der Transportvorrichtung in die gewünschte Endstelle zu erwirken.

Gemäss einem Ausführungsbeispiel steuert die Steuereinrichtung die Endstellenvorrichtung, den Sorter und/oder die Aufnahmevorrichtung so an, dass zu einem gegebenen Zeitpunkt maximal ein Stückgut in dem Zwischenspeicher aufgenommen wird.

Gemäss einem Ausführungsbeispiel steuert die Steuereinrichtung die Endstellenvorrichtung und/oder die Endstelleneinrichtung und/oder die Sortieranalage so an, dass ein erstes und ein zweites von dem Sorter an die Aufnahmevorrichtung abgegebenes Stückgut gleichzeitig in dem Zwischenspeicher gelagert werden, sofern diese in dieselbe Endstelle einzusortieren sind.

Gemäss einem Ausführungsbeispiel sind die in einer Reihe angeordneten Endstellen in einer ausziehbaren Schublade angeordnet.

Gemäss einem Ausführungsbeispiel ist die Endstelle ausgestaltet, die in ihr enthaltenen Stückgüter in einer Gruppe auf eine Sammel-Bandfördervorrichtung abzugeben und die Sammel-Bandfördervorrichtung ist ausgestaltet, die Stückgüter in der Gruppe abzutransportieren.

Weitere Merkmale, Eigenschaften und Vorteile der vorliegenden Erfindung ergeben sich aus der nachfolgenden Beschreibung unter Bezugnahme auf die beiliegenden Figuren. In den Ausführungsbeispielen und Figuren können gleiche oder gleich wirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis im Verhältnis größer dimensioniert dargestellt sein. Dabei zeigen:
Figur 1 zeigt eine schematische Draufsicht auf eine Sortieranlage die mehrere Endstellenvorrichtungen umfasst gemäss einem Ausführungsbeispiel der Erfindung.
Figur 2 zeigt schematisch eine Seitenansicht eines Ausschnitts der Sortieranlage und einer Endstellenvorrichtung von Figur 1.

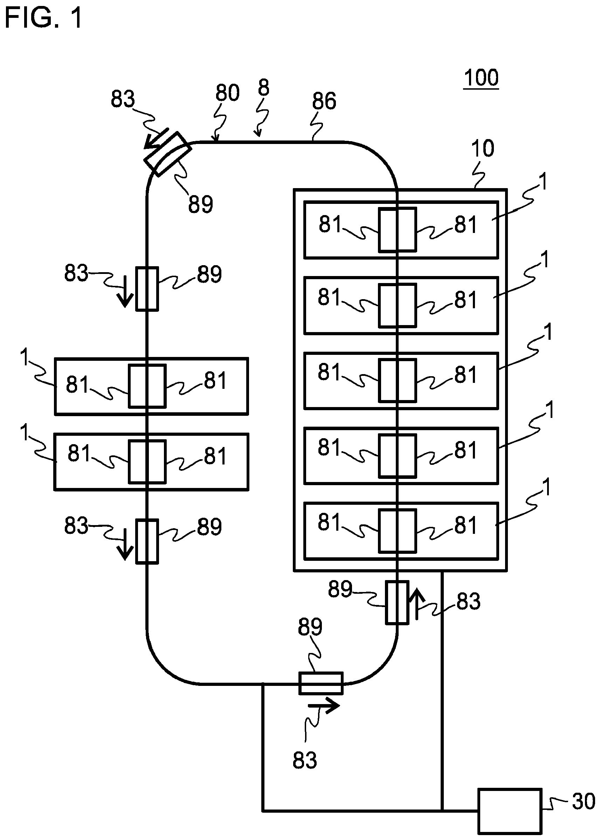

Figur 1 zeigt eine Sortieranlage 100 gemäss einem Ausführungsbeispiel der Erfindung. Die Sortieranlage 100 umfasst einen Sorter 8 und mehrere Endstellenvorrichtungen 1. Die Endstellenvorrichtungen 1 können von einer Endstelleneinrichtung 10 umfasst sein.

Der Sorter 8 umfasst ein Fördersystem 80 und Sorterausgänge 81. Das Fördersystem 80 umfasst einen Förderpfad 86 sowie Ladungsträger 89 und ist ausgestaltet, die Ladungsträger 89 entlang des Förderpfades 86 zu fördern. Die Sorterausgänge 81 sind entlang des Förderpfades 86 so angeordnet und eingerichtet, dass ein Stückgut 5 von den Ladungsträgern 89 über einen gewünschten Sorterausgang 81 aus dem Sorter 8 ausgeschleust werden kann. Die Ladungsträger 89 sind ausgestaltet, ein Stückgut 5 für den Transport entlang des Förderpfades aufzunehmen und dieses an einen gewünschten Sorterausgang 81 zu übergeben um das Stückgut aus dem Sorter auszuschleusen. In dem in Figur 1 dargestellten Ausführungsbeispiel ist der Sorter 8 als umlaufender Kreissorter ausgestaltet, auf welchem die Ladungsträger 89 in einem geschlossenen Förderpfad 86 umlaufen.

Ein Ladungsträger 89 kann mindestens ein Ausschleuselement umfassen, beispielswese eine Kippschale oder einen Quergurt (im technischen Gebiet auch oft als Crossbelt bezeichnet), das eingerichtet ist, das Stückgut 5 an einen Sorterausgang zu übergeben und so aus dem Sorter auszuschleusen. Ein Ladungsträger 89 kann alternativ oder zusätzlich jedoch auch eine Abwurfluke (englisch auch Bombay genannt) umfassen, welche das Stückgut 5 nach unten in einen an einer Unterseite des Förderpfads 86 angeordneten Sorterausgang abwirft und dieses so aus dem Sorter 8 ausschleust.

In weiteren Varianten ist der Sorter nicht als Kreissorter, sondern als ein anderer geeigneter Sorter, beispielsweise als ein Linearsorter ausgeführt. Die Ladungsträger können als Teil einer zusammenhängenden Zugkomposition oder einzeln entlang der Spur geführt werden.

Gemäss weiteren Ausführungsbeispielen sind die Ladungsträger von einem fahrerlosen Transportfahrzeug umfasst und werden von diesem nicht-spurgeführt gefördert. Synonym für den Begriff "Fahrerloses Transportfahrzeug" wird im deutschen Sprachgebrauch auch oft die englische Übersetzung "Automated Guided Vehicle" verwendet. In dieser Variante umfasst der Sorter eine für das Befahren durch die AGVs vorgesehene Fahrbahn, die einem AGV auch Raum zum Manövrieren oder Überholen anderer AGVs lässt.

Gemäss Ausführungsbeispielen umfasst der Förderpfad 86 ein Förderband auf welchem die Ladungsträger montiert sind. Gemäss weiteren Varianten umfasst der Förderpfad ein Karussell, auf welchem die Ladungsträger montiert sind, oder einen Seilzug an welchem die Ladungsträger angekoppelt sind.

In dem in Figur 1 dargestellten Ausführungsbeispiel sind jeweils zwei Sorterausgänge 81 seitlich links und rechts der Spur als Sorterausgangspaar angeordnet. In weiteren Varianten können die Sorterausgänge 81 jedoch auch auf nur einer Seite des Sorters 8, beispielsweise nur auf der äusseren Seite des Kreissorters 8, oder nur auf dessen innerer Seite, angeordnet sein. Ebenso können die Sorterausgänge 81 einzeln, also nicht als Sorterausgangspaar je nach Bedarf seitlich links und rechts des Förderpfads 86 angeordnet sein.

Jede der Endstellenvorrichtungen 1 ist ausgestaltet, mit jeweils mindestens einem Sorterausgang 81 des Sorters 8 zu interagieren, um Stückgüter von dem Sorterausgang 81 aufzunehmen und diese an ihre Transportvorrichtung 4 abzugeben.

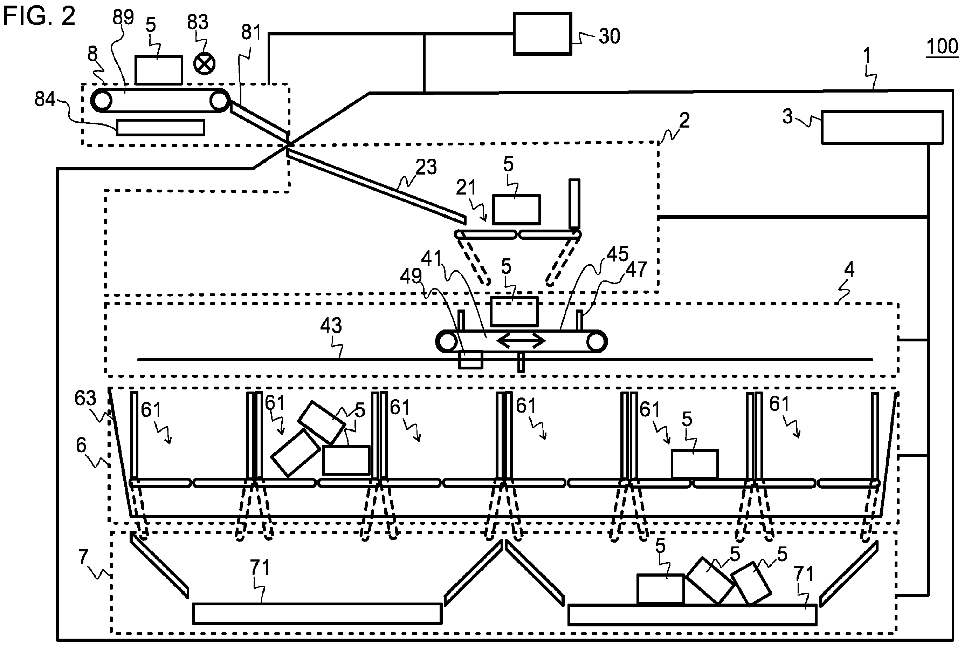

Figur 2 zeigt schematisch eine Seitenansicht durch einen Ausschnitt der Sortieranlage 100 von Figur 1 gemäss einer weiter spezifizierten Ausführungsvariante. Die Sortieranlage 100 umfasst den Sorter 8 und die Endstellenvorrichtung 1.

In der in Figur 2 dargestellten Variante umfasst der Sorter 8 ein Fördermittel 84, beispielsweise ein Förderband, das auf dem Fördermittel 84 angeordnete Ladungsträger 89 entlang des Förderpfades 86 fördert. Die Ladungsträger 89 umfassen einen antreibbaren Quergurt (Crossbelt), der ausgestaltet ist, Stückgüter für den Transport entlang des Förderpfades 86 zu transportieren und bei dem Sorterausgang 81 seitlich zur Hauptförderrichtung 83 auf den als Rutsche ausgestalteten Sorterausgang 81 abzuwerfen. Mit "Hauptförderrichtung" ist die lokale Hauptförderrichtung gemeint, da für einen Kreissorter nicht an jeder Stelle der geschlossenen Bahn der Geschwindigkeitsvektor im dreidimensionalen Raum gleich sein kann.

Die Endstellenvorrichtung 1 umfasst eine Aufnahmevorrichtung 2, eine Transportvorrichtung 4 und eine Reihenanordnung 6 von in einer Reihe angeordneten Endstellen 61 entlang der lokalen Hauptförderrichtung 83 des Sorters.

Die Aufnahmevorrichtung 2 umfasst eine Rutsche 23 und einen Zwischenspeicher 21. Die Rutsche 23 ist ausgestaltet, das Stückgut 5 von der Rutsche 81 zu übernehmen und in den Zwischenspeicher zu übergeben. Der Zwischenspeicher 21 ist ausgestaltet, das Stückgut von der Rutsche 23 zu übernehmen, zu zwischenspeichern und an die Transportvorrichtung 4 abzugeben. Der Zwischenspeicher 21 umfasst eine als Abwurfschacht ausgestaltete öffenbare Bodenluke, durch welche das Stückgut 5 abgeworfen werden kann. Die Bodenluke kann beispielsweise eine Doppelfallklappe oder eine Einfachfallklappe umfassen, auf welcher das Stückgut während dessen Zwischenspeicherung vorzugsweise aufliegt, und durch welche das Stückgut aus dem Zwischenspeicher an die Transportvorrichtung abgegeben wird. Gemäss andern Varianten umfasst der Zwischenspeicher 21 einen Bandförderer, der ausgestaltet ist, das Stückgut 5 in die Transportvorrichtung 4 abzuwerfen. In einer weiteren Variante ist der Zwischenspeicher 21 ausgestaltet, das Stückgut 5 mittels einer Schiebevorrichtung aus dem Zwischenspeicher 21 zu schieben und dieses so an die Transportvorrichtung 4 zu übergeben. In einer weiteren Variante umfasst der Zwischenspeicher 21 eine horizontal verschiebbare Auflagefläche, auf welcher das Stückgut 5 aufliegt, und welche automatisch unter die Rutsche 23 verschiebbar ist, so dass ein auf der Auflagefläche aufliegendes Stückgut von dem unteren Ende der Rutsche 23 daran gehindert wird, sich mit der Auflagefläche unter die Rutsche 23 zu bewegen bis es auf diese Weise von der Auflagefläche und somit von dem Zwischenspeicher abgeworfen und an die Transportvorrichtung 4 übergeben wird. In einer Variante umfasst die Aufnahmevorrichtung 2 keinen Zwischenspeicher 21, sondern die Rutsche 23 ist ausgestaltet, das Stückgut 5 direkt an die Transportvorrichtung 4 zu übergeben.

Die Transportvorrichtung 4 umfasst eine Transporteinheit 41, die zur Aufnahme des Stückguts 5 zu dem Zwischenspeicher 21 oder und zu jeder der in der Reihe angeordneten Endstellen 61 bewegbar ist. In der Variante in welcher die Aufnahmevorrichtung 2 keinen Zwischenspeicher umfasst, ist die Transportvorrichtung 4 ausgestaltet, die Transporteinheit 41 zu der Rutsche 23 an eine geeignete Position zu bewegen um das Stückgut direkt von der Rutsche 23 zu übernehmen. In einer weiteren Variante wird das Stückgut 5 direkt von der Rutsche 81 an die Transporteinheit 41 übergeben. Die Endstellenvorrichtung kann in diesem Fall als Endstellenvorrichtung definiert werden, welche die Rutsche 81 umfasst, wobei die Rutsche 81 als Aufnahmevorrichtung 2 ausgestaltet ist oder von dieser umfasst ist.

Die Transportvorrichtung 4 ist ausgestaltet, das von der Aufnahmevorrichtung 2 abgegebene Stückgut 5 zu übernehmen und mit der Transporteinheit 41 an eine gewünschte der Endstellen 61 der Reihenanordnung 6 zu transportieren und in diese gewünschte Endstelle 61 abzugeben.

In der in Figur 2 dargestellten Ausführungsform ist die Transportvorrichtung 4 spurgeführt. Dies bedeutet, dass die Transportvorrichtung eine Spur 43 umfasst, beispielsweise eine Schiene, eine Rille oder einen Kanal, welche mit der Transporteinheit 41 beispielsweise formschlüssig zusammenwirkt, so dass die Transporteinheit 41 entlang der Spur 43 führbar ist. Dabei kann die Transporteinheit 41 als Schiebewagen ausgestaltet sein. In alternativen Varianten ist die Transporteinheit nicht spurgeführt, sondern beispielsweise als AGV ausgestaltet.

Gemäss einem Ausführungsbeispiel umfasst die Transporteinheit 41 einen eigenen Antrieb 49, der ausgestaltet ist, die Transporteinheit 41 aktiv anzutreiben, um diese zu der gewünschten Endstelle 61 zu bewegen.

Gemäss einer Variante ist die Transporteinheit passiv ausgestaltet. Beispielsweise umfasst die Transportvorrichtung dabei einen stationären montierten Antrieb, der nicht mit der Transporteinheit mitfährt, sondern auf diese einwirkt, um sie zu der gewünschten Endstelle zu bewegen. Beispiele solcher Antriebe sind entlang der Spur angeordnete Linearantriebe oder auch ein elektrisch oder anderweitig angetriebenes Seilzug- oder Zahnriemenzugsystem, das die Transporteinheit 41 wie eine Seilbahn in die gewünschte Richtung zieht.

In der in Figur 2 dargestellten Ausführungsform umfasst die Transporteinheit 41 einen Bandförderer 45, der ausgestaltet ist, das Stückgut 5 von der Transporteinheit 41 abzuwerfen. Der Bandförderer 45 umfasst ein Förderband auf welchem das Stückgut aufliegt, während es zu der gewünschten Endstelle transportiert wird. Das Förderband 45 umfasst Trennelemente 47, die mindestens ein Segment definieren, oder die das Förderband in Segmente unterteilen. Ein Segment nimmt dabei ein Stückgut 5 auf. Gemäss einer Variante ist das Förderband unsegmentiert. In weiteren Varianten umfasst die Transporteinheit 41 einen anderen Abwurfmechanismus, beispielsweise einen Abwurfschacht mit einer öffenbaren Bodenluke, die beispielsweise eine Doppelfallklappe umfasst, auf welcher das Stückgut 5 während des Transports zu der gewünschten Endstelle 61 aufliegt, und durch welche das Stückgut 5 in die gewünschte Endstelle abgeworfen werden kann, entsprechend dem Bombay-Prinzip. Anstelle einer Doppelfallklappe kann die Bodenluke auch eine Einfachfallklappe umfassen. In weiteren Varianten umfasst die Transporteinheit 41 eine Auflagefläche, auf welcher das Stückgut 5 während des Transports zu der gewünschten Endstelle 61 aufliegt, sowie einen Schiebemechanismus, welcher das Stückgut 5 von einer Auflagefläche hinunter schiebt um es in eine gewünschte Endstelle abzuwerfen.

In dem in Figur 2 dargestellten Ausführungsbeispiel ist die Reihenanordnung 6 der Endstellen 61 bei dem Sorterausgang 81 quer, beispielsweise orthogonal, zur lokalen Hauptförderrichtung 83 des Sorters 8 angeordnet. Die Transporteinheit 41 ist entsprechend der Anordnung der Reihenanordnung 6 ebenfalls quer zu der lokalen Hauptförderrichtung 83 des Sorters 8 verschiebbar, um das Stückgut 5 in die gewünschte Endstelle 61 abgeben zu können. Gemäss einem Ausführungsbeispiel sind die Endstellen 61 in einer geraden Reihenanordnung 6 angeordnet.

In dem in Figur 2 dargestellten Ausführungsbeispiel ist der Transporteinheit 41 eine einzige lineare Reihenanordnung 6 zugeordnet und die Transportvorrichtung 4 ist eingerichtet, Stückgüter 5 ausschliesslich in die Endstellen 61 dieser Reihenanordnung 6 abzugeben. Somit kann jedem Sorterausgang 81 oder alternativ jedem Sorterausgangspaar jeweils eine einzige lineare Reihenanordnung 6 von Endstellen 61 zugeordnet werden, die durch eine linear verschiebbare Transporteinheit 41 bedienbar ist. Dies ermöglicht einerseits ein einfaches und erweiterbares Endstellenkonzept und zudem die Unterbringung einer hohen Anzahl von Endstellen auf einer beschränkten Fläche. In einer Variante sind der Transporteinheit jedoch zwei oder mehr als zwei Reihen von Endstellen zugeordnet, und die Transportvorrichtung 4 ist eingerichtet, Stückgüter 5 in die Endstellen dieser zwei oder mehr Reihen abzugeben. Dadurch werden weniger Transporteinheiten pro Reihe benötigt.

In dem in Figur 2 dargestellten Ausführungsbeispiel umfasst die Endstellenvorrichtung 1 genau einen Zwischenspeicher 21 und eine Transporteinheit 41, wodurch mit geringem Aufwand eine hohe Flexibilität ermöglicht wird. Indem die Aufnahmevorrichtung 2 mehr als einen Zwischenspeicher 21 und/oder indem die Transportvorrichtung 4 mehr als eine Transporteinheit 41 umfasst, kann die Flexibilität für die Einsortierung von Stückgütern 5 in die Endstellen 61 zusätzlich erhöht werden.

In dem in Figur 2 dargestellten Ausführungsbeispiel umfasst die Endstellenvorrichtung 1 zudem mindestens eine als Schubladensilo ausgestaltete Schubladenvorrichtung 63. In der Schubladenvorrichtung 63 sind die in einer Reihe angeordneten Endstellen 61 angeordnet. Die Schubladenvorrichtung 63 ist in Längsrichtung der Reihenanordnung ausziehbar. Dies ermöglicht auch unter beengten Verhältnissen dicht aneinander angeordneter Endstellen einen angenehmen Zugang für die Wartung der Endstellen. In einer Variante umfasst die Schubladenvorrichtung zwei Schubladen die in genau entgegengesetzter Richtung ausziehbar sind und in eingezogenen Zustand mit deren Vorderenden aneinander angrenzen, sodass die Endstellen in einer einzigen eindimensionalen Linie in den Schubladen angeordnet sind.

In dem in Figur 2 dargestellten Ausführungsbeispiel umfasst die Endstellenvorrichtung 1 zudem eine unter der Reihenanordnung angeordnete Sammel-Bandfördervorrichtung 7 mit mindestens einem Sammelband 71. Die Endstellen 61 umfassen einen Abwurfmechanismus, um die in einer Endstelle 61 enthaltenen Stückgüter 5 in einer Gruppe abzuwerfen. In dem vorliegenden Ausführungsbeispiel ist dieser Mechanismus als öffenbare Bodenluke, die eine Doppelfallklappe umfasst, ausgestaltet. Anstelle einer Doppelfallklappe kann die Bodenluke auch eine Einfachfallklappe umfassen. Anstelle einer öffenbaren Bodenluke können gemäss weiteren Ausführungsbeispielen auch andere Mechanismen implementiert werden, beispielsweise ein Förderbandmechanismus, der die Stückgüter aus einer Endstelle fördert, ein Kippmechanismus der eine Endstelle kippt um die in ihre enthaltenen Stückgüter in einer Gruppe auszuleeren, oder ein Schiebemechanismus, der die Stückgüter in einer Gruppe aus einer Endstelle schiebt. Die Sammel-Bandfördervorrichtung 7 ist ausgestaltet, dass jede der Endstellen 61 der Endstellenvorrichtung 1 die in ihr enthaltenen Stückgüter 5 in einer Gruppe auf die Sammel-Bandfördervorrichtung 7 abgeben kann. Die Sammel-Bandfördervorrichtung 7 ist ausgestaltet, die Stückgüter 5 in der Gruppe abzutransportieren.

In dem in Figur 2 dargestellten Ausführungsbeispiel umfasst die Endstellenvorrichtung 1 zudem eine Steuereinrichtung 3, die adaptiert ist, die Aufnahmevorrichtung 2 und die Transportvorrichtung 4 anzusteuern und die Übergabe des Stückguts 5 von der Aufnahmevorrichtung 2 in die Transportvorrichtung 4 und die Abgabe des Stückguts 5 von der Transportvorrichtung 4 in die gewünschte Endstelle 61 zu erwirken.

Die Steuereinrichtung 3 ist zudem adaptiert, die Endstellenvorrichtung 1 so anzusteuern, dass zu jedem Zeitpunkt maximal ein Stückgut 5 in dem Zwischenspeicher 21 aufgenommen wird. Beispielsweise ist die Steuereinrichtung 3 adaptiert zu ermitteln oder sich zu merken, ob der Zwischenspeicher 21 belegt ist, und falls er belegt ist, kein weiteres Stückgut 5 an diesen Zwischenspeicher 21 abzugeben.

In einer Variante ist die Steuereinrichtung 3 adaptiert, die Endstellenvorrichtung 1 so anzusteuern, dass zu einem Zeitpunkt auch mehrere Stückgüter gleichzeitig in dem Zwischenspeicher aufgenommen werden, falls diese in die gleiche Endstelle sortiert werden müssen. Vorzugsweise ist die Steuereinrichtung adaptiert zu erkennen, dass diese Stückgüter in die gleiche Endstelle sortiert werden müssen. Vorzugsweise ist die Steuereinrichtung adaptiert zu erkennen, dass die diese Stückgüter ausreichend klein sind, um gleichzeitig in dem Zwischenspeicher aufgenommen zu werden.

In weiteren Varianten ist die Funktionalität der Steuereinrichtung 3 nicht in der Endstellenvorrichtung 1 untergebracht. Dabei kann die Sortieranlage 100 oder die Endstelleneinrichtung 10 eine zentrale Steuereinrichtung 30 umfassen, welche diese Funktionalität und weitere Funktionalitäten zur Steuerung der Sortieranlage oder der Endstelleneinrichtung wahrnimmt.

Gemäss einem weiteren Ausführungsbeispiel ist die Steuereinrichtung 3 oder die zentrale Steuereinrichtung 30 adaptiert, die Endstellenvorrichtung 1 und/oder die Endstelleneinrichtung 10 und/oder die Sortieranalage 100 so anzusteuern, dass ein erstes und ein zweites von dem Sorter an die Aufnahmevorrichtung 2 abgegebenes Stückgut gleichzeitig in dem Zwischenspeicher 21 aufgenommen wird, sofern das erste und das zweite Stückgut in dieselbe Endstelle 61 einzusortieren sind. Die Steuereinrichtung 3 oder die zentrale Steuereinrichtung ist vorzugsweise zudem adaptiert, die Endstellenvorrichtung 1 und/oder die Endstelleneinrichtung 10 und/oder die Sortieranalage 100 so anzusteuern, dass verhindert wird, dass zwischen dem ersten und dem zweiten Stückgut ein weiteres Stückgut von dem Sorter 8 an die Aufnahmevorrichtung 2 abgegeben wird, das an eine andere Endstelle einzusortieren ist.

Gemäss einem weiteren Ausführungsbeispiel ist die Steuereinrichtung 3 adaptiert ist, die Endstellenvorrichtung 1 und/oder die Endstelleneinrichtung 10 und/oder die Sortieranalage 100 zu veranlassen, ein erstes und ein zweites von dem Sorter 8 an die Aufnahmevorrichtung 2 abgegebenes Stückgut gleichzeitig in dem Zwischenspeicher 21 zu lagern, sofern diese in dieselbe Endstelle 61 einzusortieren sind.

Gemäss weiteren Ausführungsbeispielen werden nach dem Abwurf vom Sorter Carrier oder sonstigem Ladungsträger die Stückgüter 5 in den Zwischenspeichern 21 der Endstellenvorrichtungen 1 zwischengespeichert. Danach erfolgt in jeder Endstellenvorrichtung die Übernahme der Stückgüter auf deren Transporteinheit 41. Diese transportiert die Stückgüter zu den quer oder orthogonal zum Sorter angeordneten Endstellen 61 und wirft diese dort ab. Die Endstellen 61 stehen vorzugsweise dicht an dicht senkrecht zur Transportrichtung des Sorters 8. Ist eine Endstelle 61 voll, wird diese nach unten auf eines der Förderbänder 71 entleert. Der Inhalt wird als Schüttgut zu zentralen Verpackungseinheiten transportiert, wo die Stückgüter sortiert in Gruppen in Transportbehälter verpackt werden.

Gemäss weiteren Ausführungsbeispielen werden die Stückgüter 5 aktiv zu den Endstellen 61 transportiert. Dadurch wird ein Rutschen der Stückgüter minimiert und es kann eine sehr hohe Packungsdichte erreicht und es können mehr Endstellen auf einer vorgegebenen Fläche untergebracht werden.

Gemäss weiteren Ausführungsbeispielen erfolgt nach dem Abwurf von einem als Sorter Carrier ausgestalteten Ladungsträger eine Speicherung in dem Zwischenspeicher 21, um den Sorter 8 von der Mehrfachendstelle 1 zu entkoppeln. Dadurch kann Rezirkulation auf dem Sorter 8 verhindert oder minimiert werden. Je nach Anwendungsfall können eine oder mehrere Zwischenspeicher pro Endstellenvorrichtung implementiert werden. Der Zwischenspeicher dient auch zur Beruhigung der Stückgüter 5 nach deren dynamischen Abwurf vom Sorter 8 und einem sich daran anschliessenden Rutschvorgang.

Gemäss weiteren Ausführungsbeispielen umfasst der Sorter mindestens ein Sorterausgangspaar mit jeweils einem seitlichen Sorterausgang beiden Seiten einer Abwurfstelle des Sorters. An jeden der Sorterausgänge des Sorterausgangspaar ist eine Endstellenvorrichtung gemäss einem Ausführungsbeispiel der Erfindung angeschlossen.

Gemäss weiteren Ausführungsbeispielen ist ein Teil einer Endstellenvorrichtung unter dem Sorter angeordnet, um den Platz möglichst optimal auszunutzen.

Mit Verweis auf die Figuren 1, wird gemäss einem Ausführungsbeispiel ein Stückgut 5 auf einem Ladungsträger 89 des Sorters 8 zu einem Sorterausgang 81 transportiert, der einer Zieladresse oder Destination dieses Stückguts 5 zugeordnet ist. Das Stückgut 5 wird von dem Ladungsträger 89 in an eine Aufnahmeeinheit 2 dieser Endstelle 81 übergeben. Gemäss dem Ausführungsbeispiel wird das Stückgut von der Aufnahmeeinheit 2 dieser Endstelle in einem Zwischenspeicher 21 zwischengespeichert. Eine Transporteinheit 41 einer Transportvorrichtung 4 wird zu oder unter den Zwischenspeicher 21 bewegt oder ist bereits dort positioniert. Das Stückgut 5 wird vom Zwischenspeicher 21 in die Transporteinheit 41 übergeben. Die Transporteinheit 41 transportiert das Stückgut zu einer Endstelle 61, die der Zieladresse oder Destination dieses Stückguts 5 zugeordnet ist. Das Stückgut wird dann von der Transporteinheit in diese Endstelle 61 übergeben. In den Endstellen 61 können auf diese Weise Stückgüter akkumuliert werden, die jeweils dieselbe Zieladresse oder Destination haben. In einer Variante werden die Endstellen 61 abtransportiert und entleert. Gemäss einer weiteren Variante dieses Ausführungsbeispiels werden die Stückgüter jeweils einer Endstelle 61 in einer Gruppe auf ein Sammelband 71 entleert, als Gruppe mittels das Sammelbandes 71 abtransportiert und als Gruppe weiter prozessiert. In einer weiteren Variante werden die Stückgüter nicht durch einen Zwischenspeicher der Aufnahmevorrichtung 2 zwischengespeichert, sondern direkt von dem Aufnahmevorrichtung 2 an die Transporteinheit 21 übergeben, beispielsweise mittels einer Rutsche 23.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

## Patentansprüche

1. Endstellenvorrichtung (1) für eine Sortieranlage (100) zum Sortieren von Stückgütern (5), umfassend eine Aufnahmevorrichtung (2), eine Transportvorrichtung (4) und eine Reihenanordnung (6) von in einer Reihe angeordneten Endstellen (61);
wobei die Aufnahmevorrichtung (2) ausgestaltet ist, ein Stückgut (5) von einem Sorterausgang (81) eines Sorters (8) der Sortieranlage (100) zu übernehmen und an die Transportvorrichtung (4) abzugeben;
wobei die Transportvorrichtung (4) eine Transporteinheit (41) umfasst, die zu jeder der in der Reihe angeordneten Endstellen (61) bewegbar ist;
und wobei die Transportvorrichtung (4) ausgestaltet ist, das von der Aufnahmevorrichtung (2) abgegebene Stückgut (5) zu übernehmen und mit der Transporteinheit (41) an eine gewünschte Endstelle (61) der in der Reihe angeordneten Endstellen (61) zu transportieren und in diese gewünschte Endstelle (61) abzugeben.

2. Endstellenvorrichtung (1) nach Anspruch 1, wobei die Aufnahmevorrichtung (2) einen Zwischenspeicher (21) umfasst, in welchem das von dem Sorterausgang (81) aufgenommene Stückgut (5) zwischenspeicherbar ist, und die Transportvorrichtung (4) ausgestaltet ist, die Transporteinheit (41) zu dem Zwischenspeicher (21) zu bewegen, und der Zwischenspeicher (21) ausgestaltet ist, das Stückgut (5) an die Transporteinheit (41) abzugeben.

3. Endstellenvorrichtung (1) nach einem der vorhergehenden Ansprüche, wobei der Sorter (8) mehrere Sorterausgänge (81) umfasst und ausgestaltet ist, Stückgüter (5) seitlich zur Hauptförderrichtung (83) des Sorters (8) oder vertikal nach unten zur Hauptförderrichtung (83) des Sorters (8) aus den Sorterausgängen (81) auszuschleusen.

4. Endstellenvorrichtung (1) nach einem der vorhergehenden Ansprüche, wobei die Reihenanordnung (6) der Endstellen (61) bei dem Sorterausgang (81) quer zur Hauptförderrichtung (83) des Sorters (8) angeordnet ist.

5. Endstellenvorrichtung (1) nach einem der vorhergehenden Ansprüche, wobei der Transporteinheit (41) eine einzige lineare Reihenanordnung (6) zugeordnet ist und die Transportvorrichtung (4) ausgestaltet ist, Stückgüter (5) ausschliesslich in die Endstellen (61) dieser Reihenanordnung (6) abzugeben.

6. Endstellenvorrichtung (1) nach einem der vorhergehenden Ansprüche, wobei die Transportvorrichtung (4) einen Antrieb (49) umfasst, der ausgestaltet ist, die Transporteinheit (41) aktiv anzutreiben.

7. Endstellenvorrichtung (1) nach einem der vorhergehenden Ansprüche, wobei Transporteinheit (41) als Schiebewagen ausgestaltet ist, der vorzugsweise in einer Spur (43) führbar ist.

8. Endstellenvorrichtung (1) nach einem der vorhergehenden Ansprüche, umfassend eine Steuereinrichtung (3) die adaptiert ist, die Aufnahmevorrichtung (2) und die Transportvorrichtung (4) anzusteuern und die Übergabe des Stückguts (5) von der Aufnahmevorrichtung (2) in die Transportvorrichtung (4) und die Abgabe des Stückguts (5) von der Transportvorrichtung (4) in die gewünschte Endstelle (61) zu erwirken.

9. Endstellenvorrichtung (1) nach einem der vorhergehenden Ansprüche, wobei die Steuereinrichtung (3) adaptiert ist, die Endstellenvorrichtung (1) so anzusteuern, dass zu jedem Zeitpunkt maximal ein Stückgut (5) in dem Zwischenspeicher (21) aufgenommen wird.

10. Endstellenvorrichtung (1) nach einem der vorhergehenden Ansprüche, wobei die Steuereinrichtung (3) adaptiert ist, die Endstellenvorrichtung (1) und/oder die Endstelleneinrichtung (10) und/oder die Sortieranalage (100) zu veranlassen, ein erstes und ein zweites von dem Sorter an die Aufnahmevorrichtung abgegebenes Stückgut gleichzeitig in dem Zwischenspeicher (21) zu lagern, sofern diese in dieselbe Endstelle (61) einzusortieren sind.

11. Endstellenvorrichtung (1) nach einem der vorhergehenden Ansprüche, umfassend eine Schubladenvorrichtung (63) in welcher die in einer Reihe angeordneten Endstellen (61) angeordnet sind und die ausziehbar ist.

12. Endstellenvorrichtung (1) nach einem der vorhergehenden Ansprüche, umfassend eine unter der Reihenanordnung angeordnete Sammel-Bandfördervorrichtung (7); wobei jede der Endstellen (61) der Endstellenvorrichtung (1) ausgestaltet ist, die in ihr enthaltenen Stückgüter (5) in einer Gruppe auf die Sammel-Bandfördervorrichtung (7) abzugeben und die Sammel-Bandfördervorrichtung (7) ausgestaltet ist, die Stückgüter (5) in der Gruppe abzutransportieren.

13. Endstelleneinrichtung (10) umfassend eine oder mehrere Endstellenvorrichtungen (1) gemäss einem der vorhergehenden Ansprüche, wobei jede der Endstellenvorrichtungen (1) ausgestaltet ist mit jeweils einem Sorterausgang (81) des Sorters (8) zusammenzuwirken um Stückgüter von dem Sorterausgang (81) aufzunehmen und diese an ihre Transportvorrichtung (4) abzugeben.

14. Sortieranlage (100) umfassend den Sorter (8) sowie eine Endstellenvorrichtung (1) oder mehrere Endstellenvorrichtungen (1) nach einem der Ansprüche 1 bis 12 oder eine oder mehrere Endstelleneinrichtungen (10) nach Anspruch 13.

15. Verfahren zum Sortieren von Stückgütern (5), umfassend die Verfahrensschritte:
- Übergeben eines Stückguts (5) von einem Sorterausgang (81) eines Sorters (8) an eine Aufnahmevorrichtung (2) einer Endstellenvorrichtung;
- Abgeben des Stückguts (5) von der Aufnahmevorrichtung (2) an eine Transporteinheit (41) einer Transportvorrichtung (4), wobei der Transporteinheit (41) eine Reihenanordnung (6) von in einer Reihe angeordneten Endstellen (61) zugeordnet ist, und die Transporteinheit (41) zu jeder in einer Reihenanordnung angeordneten Endstellen (61) bewegbar ist;
- Transportieren des an die Transporteinheit (41) abgegebenen Stückguts (5) mittels der Transporteinheit (41) zu einer gewünschten Endstelle (61) der in der Reihe angeordneten Endstellen (61) und übergeben des Stückguts (5) von der Transporteinheit (41) an diese gewünschte Endstelle (61).
